# EUROPEAN PATENT APPLICATION

(11) **EP 4 779 770 A1**
(43) Date of publication of application: **22.07.2026**
(21) Application number: 24865330.5
(22) Date of filing: 04.09.2024
(51) Int. Cl.: H01M 50/204, H01M 50/289, H01M 50/367

(54) **BATTERY PACK**

(30) Priority: 14.09.2023 JP 2023148957
(71) Applicant: AESC Japan Ltd., Yokohama-shi, Kanagawa 220-0012 (JP)
(72) Inventor: NAKAI Masayuki, Zama-shi, Kanagawa 252-0012 (JP)
(74) Representative: Mathys & Squire
(86) International application number: PCT/JP2024/031675
(87) International publication number: WO 2025/057828

(57) **Abstract**

A battery pack (1) includes a battery module (10), a pack housing (20) that accommodates the battery module (10), and an upper case (30) that is at least partially positioned between at least a part of the battery module (10) and at least a part of the pack housing (20).

## Description

### TECHNICAL FIELD

The present invention relates to a battery pack.

### BACKGROUND ART

In recent years, various battery packs have been developed. The battery pack includes a battery module and a housing that accommodates the battery module. The battery module includes a plurality of battery cells that is electrically connected in series, in parallel, or in a combination of series and parallel.

Patent Document 1 discloses an example of a battery module. The battery module includes a plurality of battery cells, a case that accommodates the plurality of battery cells, and a cover that is attachable to and detachable from the case. A space is present between a part of the case and a part of the cover.

Patent Document 2 discloses an example of a battery pack. The battery pack includes a case that accommodates a plurality of battery modules. The case includes a lower housing and an upper housing. The lower housing includes a partition beam that divides a space that accommodates the plurality of battery modules into a plurality of sub-cavities.

Patent Document 3 discloses an example of an automotive power battery. The automotive power battery includes an automotive battery main body, an inner housing that covers the automotive battery main body, and an outer housing that covers the inner housing.

### RELATED DOCUMENT

### PATENT DOCUMENT

Patent Document 1: Japanese Unexamined Patent Publication No. 2021-072177
Patent Document 2: Chinese Utility Model Publication No. 210489699
Patent Document 3: Chinese Utility Model Publication No. 208489303

### SUMMARY OF THE INVENTION

### TECHNICAL PROBLEM

In the battery pack, when abnormal heat generation occurs in the battery cell, a relatively high-temperature gas may be generated from the battery module. When the gas generated from the battery module is directly blown to the housing, it may be difficult to improve heat resistance of the battery pack.

An example of an object of the present invention is to improve heat resistance of the battery pack. Other objects of the present invention will become apparent from the description of the present specification.

### SOLUTION TO PROBLEM

An aspect of the present invention is as follows.
1. A battery pack including:
   a battery module;
   a housing that accommodates the battery module; and
   a partition member that is at least partially positioned between at least a part of the battery module and at least a part of the housing.
2. The battery pack according to 1., in which the partition member is spaced from at least one of the at least a part of the battery module and the at least a part of the housing.
3. The battery pack according to 1. or 2., in which a space is present in at least one of between the partition member and the at least a part of the battery module and between the partition member and the at least a part of the housing.
4. The battery pack according to any one of 1. to 3., in which the partition member has heat resistance.

### ADVANTAGEOUS EFFECTS OF INVENTION

According to the aspect of the present invention, heat resistance of the battery pack can be improved.

### BRIEF DESCRIPTION OF THE DRAWINGS

[FIG. 1] A top view of a battery pack according to an embodiment.
[FIG. 2] A cross-sectional view taken along line A-A of FIG. 1.
[FIG. 3] A cross-sectional view of a battery pack according to a first variant of FIG. 2.
[FIG. 4] A cross-sectional view of a battery pack according to a second variant of FIG. 2.

### DESCRIPTION OF EMBODIMENTS

Hereinafter, embodiments and variants of the present invention will be described with reference to the accompanying drawings. In all drawings, the same constituent elements are denoted by the same reference signs, and detailed description thereof will not be repeated.

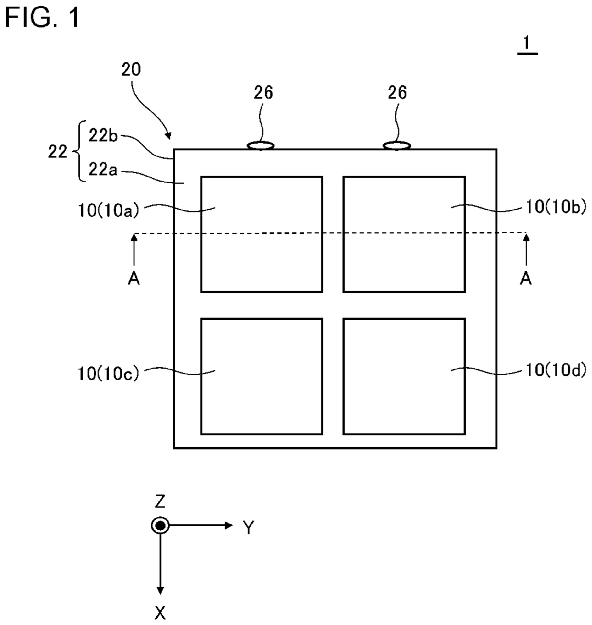

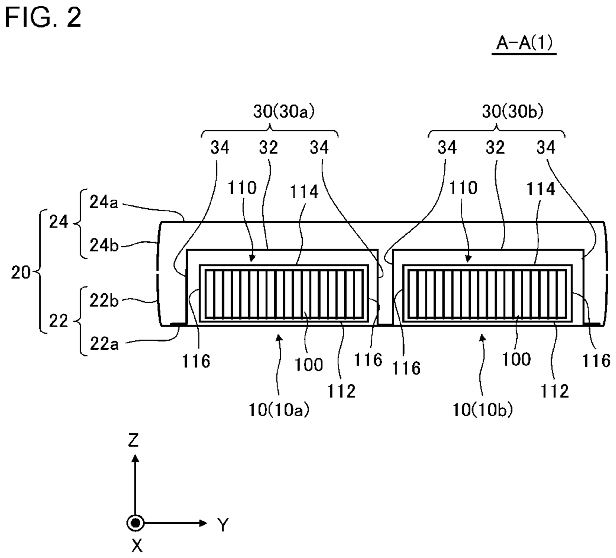

FIG. 1 is a top view of a battery pack 1 according to the embodiment. FIG. 2 is a cross-sectional view taken along line A-A of FIG. 1. For description, in FIG. 1, a pack upper case 24 and a plurality of upper cases 30 shown in FIG. 2 are removed.

In the embodiment, the battery pack 1 is mounted in an automobile. Specifically, the battery pack 1 is mounted between front wheels and rear wheels of the automobile. Hereinafter, the battery pack 1 will be described as being mounted in the automobile unless otherwise specified. However, the battery pack 1 can also be applied to applications other than the automobile.

In each drawing, X, Y, and Z directions are shown for description. The X direction indicates a front-rear direction of the battery pack 1. The Y direction is orthogonal to the X direction. The Y direction indicates a left-right direction of the battery pack 1. The Z direction is orthogonal to both the X direction and the Y direction. The Z direction indicates an up-down direction of the battery pack 1. The arrow indicating the X direction, indicating the Y direction, and the arrow indicating the Z direction indicate a front direction, a left direction, and an up direction of the battery pack 1, respectively. In FIG. 1, the white circle with the black dot indicating the Z direction indicates that the arrow indicating the Z direction extends from behind the paper plane to the front side of the paper plane. In FIG. 2, the white circle with the black dot indicating the X direction indicates that the arrow indicating the X direction extends from behind the paper plane to the front side of the paper plane. The relationship between the X direction, the Y direction, and the Z direction and a front-rear direction, a left-right direction, and an up-down direction of the battery pack 1 is not limited to the example of the description according to the embodiment.

In the embodiment, the front-rear direction, the left-right direction, and the up-down direction of the battery pack 1 are determined by the automobile on which the battery pack 1 is mounted. The X direction, the Y direction, and the Z direction indicate a front-rear direction, a left-right direction, and an up-down direction of the automobile, respectively. The arrow indicating the X direction, the arrow indicating the Y direction, and the arrow indicating the Z direction indicate a front direction, a left direction, and an up direction of the automobile, respectively. However, the relationship between the front-rear direction, the left-right direction, and the up-down direction of the battery pack 1 and the front-rear direction, the left-right direction, and the up-down direction of the automobile is not limited to this example.

Hereinafter, as necessary, the side indicated by the arrow indicating the X direction is referred to as a +X side, and the side opposite to the side indicated by the arrow indicating the X direction is referred to as a -X side. Hereinafter, as necessary, the side indicated by the arrow indicating the Y direction is referred to as a +Y side, and the side opposite to the side indicated by the arrow indicating the Y direction is referred to as a -Y side. Hereinafter, as necessary, the side indicated by the arrow indicating the Z direction is referred to as a +Z side, and the side opposite to the side indicated by the arrow indicating the Z direction is referred to as a -Z side.

The battery pack 1 will be described with reference to FIGS. 1 and 2.

As shown in FIGS. 1 and 2, the battery pack 1 includes a plurality of battery modules 10, a pack housing 20, and a plurality of upper cases 30. As shown in FIG. 2, each battery module 10 includes a plurality of battery cells 100 and a module housing 110. As shown in FIGS. 1 and 2, the pack housing 20 includes a pack lower case 22, a pack upper case 24, and a pair of pressure relief valves 26. As shown in FIGS. 1 and 2, the pack lower case 22 includes a pack lower plate 22a and a pack frame 22b. As shown in FIG. 2, the pack upper case 24 includes a pack upper plate 24a and a pack upper side cover 24b. As shown in FIG. 2, each upper case 30 includes an upper plate 32 and a pair of side plates 34.

As shown in FIG. 1, in the embodiment, four battery modules 10 are disposed in two rows and two columns in the X direction and the Y direction. Hereinafter, as necessary, the battery module 10 positioned on the -X side and -Y side of the four battery modules 10 will be referred to as a first battery module 10a, the battery module 10 positioned on the -X side and +Y side of the four battery modules 10 will be referred to as a second battery module 10b, the battery module 10 positioned on the +X side and -Y side of the four battery modules 10 will be referred to as a third battery module 10c, and the battery module 10 positioned on the +X side and +Y side of the four battery modules 10 will be referred to as a fourth battery module 10d. However, the number and the disposition of the battery modules 10 are not limited to the number and the disposition according to the embodiment.

As shown in FIG. 2, in each battery module 10, the plurality of battery cells 100 is stacked in the Y direction. Hereinafter, the plurality of battery cells 100 stacked in the Y direction will be referred to as a stack of the battery cells 100, as necessary. A dimension of each battery cell 100 in the X direction is a dimension of each battery cell 100 in the longitudinal direction. A dimension of each battery cell 100 in the Z direction is a dimension of each battery cell 100 in the lateral direction. A dimension of each battery cell 100 in the Y direction is a dimension of each battery cell 100 in the thickness direction. The shape of each battery cell 100 is not limited to this example.

Each battery cell 100 includes a battery element and an exterior material that seals the battery element. The battery element includes at least one positive electrode, at least one negative electrode, and at least one separator. For example, a plurality of positive electrodes and a plurality of negative electrodes are alternately stacked in the Y direction. At least a part of the separator is located between the positive electrode and the negative electrode adjacent to each other in the Y direction. For example, each of a plurality of sheet-shaped separators may be positioned between the positive electrode and the negative electrode adjacent to each other in the Y direction. Alternatively, one sheet-shaped separator may have a zigzag shape that passes through a region between the positive electrode and the negative electrode adjacent to each other in the Y direction. Alternatively, the positive electrode, the negative electrode, and the separator may be wound such that the separator is disposed between the positive electrode and the negative electrode. For example, the positive electrode, the negative electrode, and the separator are wound with both surfaces of one of the positive electrode and the negative electrode are covered with the separator. In another example, a stacked body including a plurality of unit stacked bodies each including a positive electrode, a separator, and a negative electrode in this order may be wound. However, the winding structure of the positive electrode, the negative electrode, and the separator is not limited to these examples.

The battery cell 100 may be a solid state battery. In the solid state battery, a solid electrolyte layer is provided in a portion corresponding to the separator. The solid state battery does not include the electrolytic solution. Hereinafter, the battery cell 100 will be described as a battery cell including an electrolytic solution unless otherwise specified.

In each battery module 10, the plurality of battery cells 100 is electrically connected in series, in parallel, or in a combination of series and parallel. The plurality of battery cells 100 is electrically connected to each other via a positive electrode terminal and a negative electrode terminal (not shown) disposed on opposite sides of each battery cell 100 in the X direction or via a positive electrode terminal and a negative electrode terminal (not shown) disposed on one of a +X side or a -X side of each battery cell 100. For example, the plurality of battery cells 100 of each battery module 10 may be connected in series from the battery cell 100 positioned at the +Y side end of the stack of the battery cells 100 to the battery cell 100 positioned at the -Y side end of the stack of the battery cells 100. Alternatively, the plurality of battery cells 100 of each battery module 10 may be connected in parallel. Alternatively, a plurality of cell groups including the plurality of battery cells 100 connected in parallel may be connected in series.

As shown in FIG. 2, in each battery module 10, the module housing 110 accommodates the stack of the battery cells 100. Specifically, the module lower plate 112 covers the -Z side portion of the stack of the battery cells 100. The module upper plate 114 covers the +Z side portion of the stack of the battery cells 100. The pair of module side plates 116 cover both side portions of the stack of the battery cells 100 in the Y direction. The module housing 110 further includes a plate (not shown) that covers the X directional opposite side portions of the stack of the battery cells 100.

As shown in FIGS. 1 and 2, the pack housing 20 accommodates the plurality of battery modules 10. Specifically, in the example shown in FIG. 1, the pack lower plate 22a has a substantially quadrangular plate shape having a pair of sides parallel to the X direction and another pair of sides parallel to the Y direction as viewed in the Z direction. However, the shape of the pack lower plate 22a is not limited to the shape shown in FIG. 1. The plurality of battery modules 10 is disposed on the +Z side surface side of the pack lower plate 22a. The pack frame 22b is disposed on the +Z side surface side of the pack lower plate 22a. As viewed in the Z direction, the pack frame 22b at least partially surrounds a space in which the plurality of battery modules 10 are accommodated. Hereinafter, as necessary, a space surrounded by the pack frame 22b as viewed in the Z direction will be referred to as an accommodation space of the pack housing 20. In the example shown in FIG. 1, the pack frame 22b has a substantially quadrangular frame shape having a pair of sides parallel to the X direction and another pair of sides parallel to the Y direction as viewed in the Z direction. However, the shape of the pack frame 22b is not limited to the shape shown in FIG. 1. As shown in FIG. 2, the pack upper plate 24a covers the plurality of battery modules 10 from the +Z side. The pack upper side cover 24b extends from an outer peripheral edge of the pack upper plate 24a around the Z direction toward the -Z side.

As shown in FIG. 1, the pair of pressure relief valves 26 are provided on the -X side outer surface of the pack frame 22b. When abnormal heat generation occurs in the battery cell 100, a relatively high-temperature gas generated from the battery module 10 may be discharged to the accommodation space of the pack housing 20. This gas is discharged to the outside of the battery pack 1 via the pair of pressure relief valves 26. However, the number and the disposition of the pressure relief valves 26 are not limited to the example shown in FIG. 1.

As shown in FIG. 2, each of the plurality of upper cases 30 at least partially accommodates each of the plurality of battery modules 10. Hereinafter, as necessary, an upper case 30 that at least partially accommodates the first battery module 10a will be referred to as a first upper case 30a, and an upper case 30 that at least partially accommodates the second battery module 10b will be referred to as a second upper case 30b.

The first upper case 30a will be described with reference to FIG. 2. The description of the first upper case 30a can be similarly applied to the second upper case 30b, an upper case 30 that at least partially accommodates the third battery module 10c, and an upper case 30 that at least partially accommodates the fourth battery module 10d.

As shown in FIG. 2, the upper plate 32 of the first upper case 30a covers the +Z side surface of the module upper plate 114 of the first battery module 10a. In the example shown in FIG. 2, the upper plate 32 of the first upper case 30a is substantially perpendicular to the Z direction. However, the upper plate 32 of the first upper case 30a may be inclined obliquely with respect to a direction perpendicular to the Z direction at least partially. A protection circuit (not shown) electrically connected to the first battery module 10a may be provided on the upper plate 32 of the first upper case 30a. For example, the protection circuit may be disposed on the +Z side surface side of the upper plate 32 of the first upper case 30a. By providing the protection circuit on the upper plate 32 of the first upper case 30a, the bottom surface area of the battery pack 1 perpendicular to the Z direction can be reduced as compared to a case where the protection circuit is provided on, for example, the pack lower plate 22a. The pair of side plates 34 of the first upper case 30a extend toward the -Z side from both end portions of the upper plate 32 of the first upper case 30a in the Y direction. The pair of side plates 34 of the first upper case 30a cover both outer surfaces of the pair of module side plates 116 of the first battery module 10a in the Y direction.

As shown in FIG. 2, the first upper case 30a is at least partially positioned between at least a part of the first battery module 10a and at least a part of the pack housing 20. Specifically, the upper plate 32 of the first upper case 30a is positioned between in the Z direction the +Z side surface of the module upper plate 114 of the first battery module 10a and the -Z side surface of the portion of the pack upper plate 24a overlapping the first battery module 10a in the Z direction. When abnormal heat generation occurs in the battery cell 100 of the first battery module 10a, a relatively high-temperature gas may be generated from the first battery module 10a. The module upper plate 114 of the first battery module 10a may have a gas discharge portion such as a gas hole that discharges a gas generated from the first battery module 10a upon occurrence of abnormal heat generation in the battery cell 100 of the first battery module 10a. When the module upper plate 114 of the first battery module 10a has the gas discharge portion, the gas generated from the first battery module 10a may be blown toward the +Z side through the gas discharge portion provided on the module upper plate 114 of the first battery module 10a. In the embodiment, the upper plate 32 of the first upper case 30a is a partition member that partitions the +Z side surface of the module upper plate 114 of the first battery module 10a and the -Z side surface of the portion of the pack upper plate 24a overlapping the first battery module 10a in the Z direction from each other. Therefore, the gas generated from the first battery module 10a can be diffused by the upper plate 32 of the first upper case 30a. Therefore, when abnormal heat generation occurs in the battery cell 100 of the first battery module 10a, the blowing of the gas generated from the first battery module 10a directly to the pack upper plate 24a can be suppressed by the upper plate 32 of the first upper case 30a. Therefore, in the embodiment, the heat resistance of the battery pack 1 can be improved as compared to a case where the upper plate 32 of the first upper case 30a is not provided.

A relatively high-temperature gas is blown to the upper plate 32 of the first upper case 30a from the first battery module 10a. Therefore, it is preferable that the upper plate 32 of the first upper case 30a has heat resistance. The upper plate 32 of the first upper case 30a may include, for example, steel such as stainless steel. A melting point of steel such as stainless steel is relatively high. Therefore, when the upper plate 32 of the first upper case 30a includes steel such as stainless steel, the heat resistance of the upper plate 32 of the first upper case 30a can be improved. When the upper plate 32 of the first upper case 30a is to be provided with electrical insulating properties, the upper plate 32 of the first upper case 30a may include, for example, an insulating material such as glass fiber or ceramic. For example, the insulating material such as glass fiber or ceramic may cover a surface of the upper plate 32 of the first upper case 30a. Alternatively, the entire upper plate 32 of the first upper case 30a may be formed of an insulating material such as glass fiber or ceramic. Even if the upper plate 32 of the first upper case 30a includes an insulating material such as glass fiber or ceramic, the heat resistance of the upper plate 32 of the first upper case 30a can be improved.

The first upper case 30a is not sealed with the first battery module 10a in order to release the gas generated from the first battery module 10a. For example, the X directional opposite ends of the first upper case 30a may be open without a side plate corresponding to the side plate 34 at the in the X directional opposite end portions of the upper plate 32 of the first upper case 30a. Alternatively, when the upper plate 32 of the first upper case 30a has a substantially quadrangular shape as viewed in the Z direction, the upper plate 32 of the first upper case 30a may be supported by four supports disposed at four corners of the upper plate 32 of the first upper case 30a as viewed in the Z direction.

As shown in FIG. 2, the -Z side surface of the upper plate 32 of the first upper case 30a and the +Z side surface of the module upper plate 114 of the first battery module 10a are spaced from each other in the Z direction. Therefore, a space is present between the -Z side surface of the upper plate 32 of the first upper case 30a and the +Z side surface of the module upper plate 114 of the first battery module 10a. When a space is present between the -Z side surface of the upper plate 32 of the first upper case 30a and the +Z side surface of the module upper plate 114 of the first battery module 10a, the gas blown from the first battery module 10a toward the +Z side upon occurrence of abnormal heat generation in the battery cell 100 of the first battery module 10a can be easily diffused by the upper plate 32 of the first upper case 30a to improve the heat resistance of the battery pack 1 as compared to a case where the -Z side surface of the upper plate 32 of the first upper case 30a and the +Z side surface of the module upper plate 114 of the first battery module 10a directly contact each other without the space therebetween.

As shown in FIG. 2, the +Z side surface of the upper plate 32 of the first upper case 30a and the -Z side surface of the pack upper plate 24a are spaced from each other in the Z direction. Therefore, a space is present between the +Z side surface of the upper plate 32 of the first upper case 30a and the -Z side surface of the pack upper plate 24a. When a space is present between the +Z side surface of the upper plate 32 of the first upper case 30a and the -Z side surface of the pack upper plate 24a, the blowing of the gas generated from the first battery module 10a directly to the pack upper plate 24a upon occurrence of abnormal heat generation in the battery cell 100 of the first battery module 10a can be suppressed by the upper plate 32 of the first upper case 30a to improve the heat resistance of the battery pack 1 as compared to a case where the first upper case 30a is not present or the +Z side surface of the upper plate 32 of the first upper case 30a and the -Z side surface of the pack upper plate 24a directly contact each other without the space therebetween.

The structure of the first upper case 30a is not limited to the example shown in FIG. 2.

For example, the -Z side surface of the upper plate 32 of the first upper case 30a and the +Z side surface of the module upper plate 114 of the first battery module 10a may partially directly contact each other without the space therebetween as long as at least a part of the -Z side surface of the upper plate 32 of the first upper case 30a and at least a part of the +Z side surface of the module upper plate 114 of the first battery module 10a are spaced from each other in the Z direction. Even if the -Z side surface of the upper plate 32 of the first upper case 30a and the +Z side surface of the module upper plate 114 of the first battery module 10a partially directly contact each other, the gas blown from the first battery module 10a toward the +Z side upon occurrence of abnormal heat generation in the battery cell 100 of the first battery module 10a can be diffused by a portion of the upper plate 32 of the first upper case 30a spaced from the module upper plate 114 of the first battery module 10a in the Z direction. The +Z side surface of the upper plate 32 of the first upper case 30a and the -Z side surface of the pack upper plate 24a may partially directly contact each other without the space therebetween as long as at least a part of the +Z side surface of the upper plate 32 of the first upper case 30a and at least a part of the -Z side surface of the pack upper plate 24a are spaced from each other in the Z direction.

A plurality of partition members overlapping in the Z direction may be provided between the +Z side surface of the module upper plate 114 of the first battery module 10a and the -Z side surface of the portion of the pack upper plate 24a overlapping the first battery module 10a in the Z direction, instead of one partition member such as one upper plate 32. For example, a plurality of upper plates 32 may overlap each other in the Z direction between the +Z side surface of the module upper plate 114 of the first battery module 10a and the -Z side surface of the portion of the pack upper plate 24a overlapping the first battery module 10a in the Z direction.

In the embodiment, the module upper plate 114 has a gas discharge portion that discharges a gas generated from the first battery module 10a upon occurrence of abnormal heat generation in the battery cell 100 of the first battery module 10a. However, a portion of the first battery module 10a different from the module upper plate 114 may have the gas discharge portion. For example, the -Y side module side plate 116 of the first battery module 10a may have the gas discharge portion. When the -Y side module side plate 116 of the first battery module 10a has the gas discharge portion, the -Y side module side plate 116 of the first upper case 30a may be a partition member for suppressing the blowing of the gas generated from the first battery module 10a directly to the -Y side portion of the pack frame 22b upon occurrence of abnormal heat generation in the battery cell 100 of the first battery module 10a.

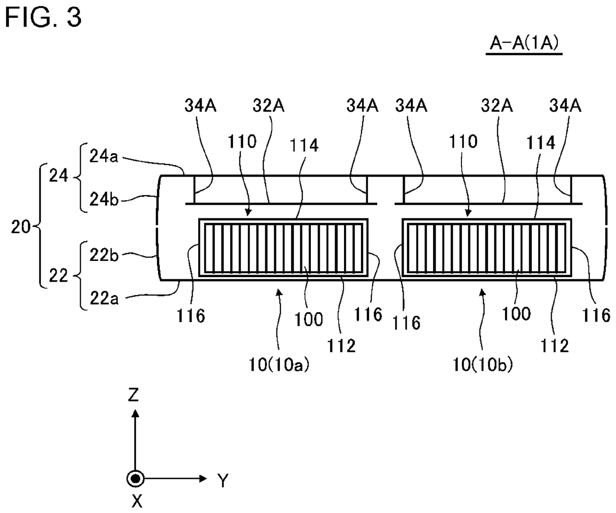

FIG. 3 is a cross-sectional view of a battery pack 1A according to a first variant of FIG. 2. The battery pack 1A according to the first variant is the same as the battery pack 1 according to the embodiment, except for the following points.

As shown in FIG. 3, each upper plate 32A may be suspended from the -Z side surface of the pack upper plate 24a toward the -Z side by a support portion 34A. The upper plate 32A is positioned in the Z direction between the +Z side surface of the module upper plate 114 of each battery module 10 and the -Z side surface of the portion of the pack upper plate 24a overlapping each battery module 10 in the Z direction. In the example shown in FIG. 3, the upper plate 32A is a partition member that partitions the +Z side surface of the module upper plate 114 of each battery module 10 and the -Z side surface of the portion of the pack upper plate 24a overlapping each battery module 10 in the Z direction from each other. Therefore, in the example shown in FIG. 3, the heat resistance of the battery pack 1A can be improved as compared to a case where the upper plate 32A is not provided.

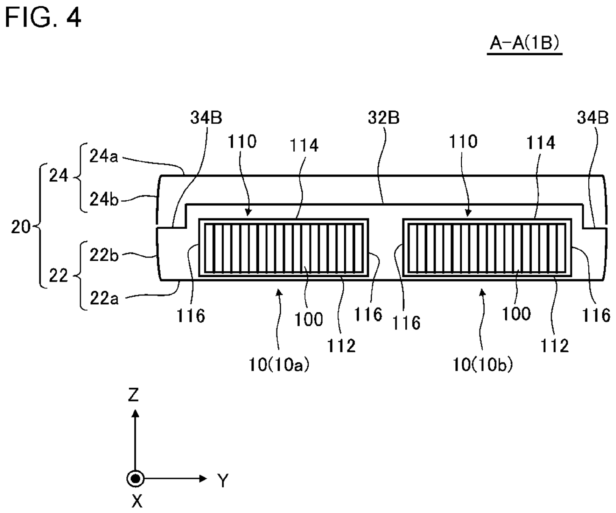

FIG. 4 is a cross-sectional view of a battery pack 1B according to a second variant of FIG. 2. The battery pack 1B according to the second variant is the same as the battery pack 1 according to the embodiment, except for the following points.

As shown in FIG. 4, the upper plate 32B may be supported by the pack frame 22b by a support portion 34B. In the example shown in FIG. 4, the upper plate 32B covers the +Z side portions of both the first battery module 10a and the second battery module 10b. The upper plate 32B is positioned in the Z direction between the +Z side surface of the module upper plate 114 of each battery module 10 and the -Z side surface of the portion of the pack upper plate 24a overlapping each battery module 10 in the Z direction. In the example shown in FIG. 4, the upper plate 32B is a partition member that partitions the +Z side surface of the module upper plate 114 of each battery module 10 and the -Z side surface of the portion of the pack upper plate 24a overlapping each battery module 10 in the Z direction from each other. Therefore, in the example shown in FIG. 4, the heat resistance of the battery pack 1B can be improved as compared to a case where the upper plate 32B is not provided.

Although the embodiments and variants of the present invention have been described above with reference to the accompanying drawings, these are merely examples of the present invention, and various other configurations may be employed.

This application claims priority based on Japanese Patent Application No. 2023-148957 filed on September 14, 2023, and the disclosure of which is incorporated herein in its entirety by reference.

### REFERENCE SIGNS LIST

1, 1A, 1B battery pack, 10 battery module, 10a first battery module, 10b second battery module, 10c third battery module, 10d fourth battery module, 20 pack housing, 22 pack lower case, 22a pack lower plate, 22b pack frame, 24 pack upper case, 24a pack upper plate, 24b pack upper side cover, 26 pressure relief valve, 30 upper case, 30a first upper case, 30b second upper case, 32, 32A, 32B upper plate, 34 side plate, 34A, 34B support portion, 100 battery cell, 110 module housing, 112 module lower plate, 114 module upper plate, 116 module side plate

## Claims

1. A battery pack comprising:
a battery module;
a housing that accommodates the battery module; and
a partition member that is at least partially positioned between at least a part of the battery module and at least a part of the housing.

2. The battery pack according to Claim 1, wherein the partition member is spaced from at least one of the at least a part of the battery module and the at least a part of the housing.

3. The battery pack according to Claim 1 or 2, wherein a space is present in at least one of between the partition member and the at least a part of the battery module and between the partition member and the at least a part of the housing.

4. The battery pack according to any one of Claims 1 to 3, wherein the partition member has heat resistance.
